(19) **Europäisches Patentamt / European Patent Office / Office européen des brevets**

(11) **EP 4 400 804 A1**

(12) **EUROPEAN PATENT APPLICATION**

(43) Date of publication:
**17.07.2024 Bulletin 2024/29**

(21) Application number: **24150157.6**

(22) Date of filing: **03.01.2024**

(51) International Patent Classification (IPC):
**G01B 9/02015** (2022.01)    **G01B 9/02017** (2022.01)
**G01B 9/02055** (2022.01)    **G01B 9/0209** (2022.01)
**G01B 11/14** (2006.01)       **G01M 11/02** (2006.01)

(52) Cooperative Patent Classification (CPC):
**G01B 9/0209; G01B 9/02021; G01B 9/0203;
G01B 9/02063; G01B 11/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023 JP 2023003695**

(71) Applicant: **CANON KABUSHIKI KAISHA
Tokyo 146-8501 (JP)**

(72) Inventor: **KAMBARA, Ayumu
Tokyo (JP)**

(74) Representative: **WESER & Kollegen
Patentanwälte PartmbB
Radeckestraße 43
81245 München (DE)**

(54) **MEASUREMENT APPARATUS, MEASURING METHOD, AND MANUFACTURING METHOD OF OPTICAL SYSTEM**

(57)     A measurement apparatus (1, 2, 3, 4, 5, 6) includes a measurement optical system (300) that makes first light (250) emitted from a chart (40) enter a tested optical system (60), an image sensor (90) that receives the first light, an adjusting unit (150) configured to adjust relative positions of the measurement and tested optical systems, an interferometer (400) configured to acquire an interference signal by causing interference between reference light (201) and test light (200), a correction unit (151, 153, 100, 154, 155, 156) that corrects a condensing position deviation between the first and test lights, the wavelength of the test light being different from the wavelength of the first light, and an acquiring unit (100) that acquires an optical path length from a first point (21p) to test surfaces based on the interference signal, and a distance between adjacent test surfaces based on the optical path length.

FIG. 1

**Description**

BACKGROUND

Technical Field

One of the aspects of the embodiments relates to a measurement apparatus configured to acquire a distance between test surfaces of an optical system.

Description of Related Art

In an optical system including a plurality of optical elements, the arrangement (or installation) accuracy of each optical element affects the optical performance. In investigating the cause of failure in such an optical system, it is effective to compare the arrangement of each optical element with the designed arrangement. In order to evaluate the arrangement in the optical axis direction of each optical element, surface distances measuring technologies has been developed.

Japanese Patent Laid-Open No. 2012-118066 discloses a measurement apparatus using the low coherence interferometry technique. In the measurement apparatus disclosed in Japanese Patent Laid-Open No. 2012-118066, test light (target light) is condensed in a tested optical system (optical system to be inspected or examined) by using a lens, the reflected light in each of the surfaces in the tested optical system and the reflected light in the reference surface are interfered, and the reference surface is driven in the optical axis direction, whereby an optical path length to each of the surfaces is acquired. However, in the measurement apparatus disclosed in Japanese Patent Laid-Open No. 2012-118066, it is difficult to determine which of the plurality of test surfaces in the tested optical system the test light is condensed on. In order to deal with such an issue, it is effective to determine the condensing surface by checking the reflected image using an image sensor.

However, since the wavelength of the light source which is used in the measurement apparatus in which low coherence interferometry technique is used disclosed in Japanese Patent Laid-Open No. 2012-118066 is generally an infrared wavelength, the cost increase due to the use of infrared cameras is unavoidable. Accordingly, visible cameras having relatively inexpensive image sensors may be used. However, with the index light in the visible light region, a condensing position deviation between the index light and the test light is caused by a wavelength difference between the index light and the test light due to the optical elements in the measurement optical system and the tested optical system, and the condensing surface cannot be accurately controlled.

SUMMARY

The present invention in its first aspect provides a measurement apparatus as specified in claims 1 to 17.

The present invention in its second aspect provides a measurement method as specified in claim 18.

The present invention in its third aspect provides a manufacturing method as specified in claim 19.

Further features of the disclosure will become apparent from the following description of embodiments with reference to the attached drawings.

BRIEF DESCRIPTION OF THE DRAWINGS

FIG. 1 illustrates a configuration of a surface distance measurement apparatus according to a first embodiment.
FIG. 2 illustrates a measurement flowchart of the surface distance measurement apparatus according to the first embodiment.
FIG. 3 illustrates a configuration of a surface distance measurement apparatus according to a second embodiment.
FIG. 4 illustrates a measurement flowchart of the surface distance measurement apparatus according to the second embodiment.
FIG. 5 illustrates a configuration of a surface distance measurement apparatus according to a third embodiment.
FIG. 6 illustrates a measurement flowchart of the surface distance measurement apparatus according to the third embodiment.
FIG. 7 illustrates a configuration of a surface distance measurement apparatus according to a fourth embodiment.
FIG. 8 illustrates a configuration of a surface distance measurement apparatus according to a fifth embodiment.
FIG. 9 illustrates a configuration of a surface distance measurement apparatus according to a sixth embodiment.
FIG. 10 illustrates a manufacturing method of an optical system using the surface distance measurement apparatus according to each of the embodiments.

DESCRIPTION OF THE EMBODIMENTS

Referring now to the accompanying drawings, a detailed description will be given of embodiments according to the disclosure. Corresponding elements in respective figures will be designated by the same reference numerals, and a duplicate description thereof will be omitted.

FIRST EMBODIMENT

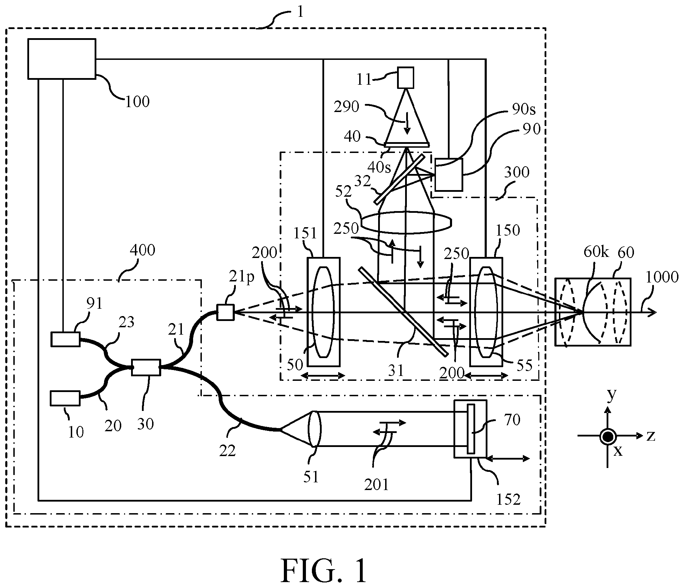

FIG. 1 illustrates the configuration of a surface distance measurement apparatus (the measurement apparatus) 1 according to a first embodiment. The surface distance measurement apparatus 1 includes an illumination light source (first light source) 11, an index chart 40, a measurement optical system 300, an image sensor 90, a stage (adjusting unit) 150, a stage (correction unit) 151, an interferometer 400, and a computer (acquiring unit) 100. A tested optical system 60 is an optical system including a plurality of lenses. The surface distance measurement apparatus 1 measures (acquires) distances among the plurality of test surfaces (surface number: N) of the tested optical system 60.

The measurement optical system 300 includes a dichroic mirror 31, a beam splitter 32, a collimator lens 50, an objective lens 55, and a collimator lens 52. The beam splitter 32 is, for example, a pellicle beam splitter. The objective lens 55 is a lens located at the closest to the tested optical system 60, and may be an achromatic lens with a small amount of chromatic aberration. A measurement axis 1000 as an optical axis of the measurement optical system 300 is parallel to a Z-axis in FIG. 1 and substantially matches the optical axis of the collimator lens 50.

Illumination light 290 emitted from an illumination light source 11 illuminates the index chart 40 of a transmission type. The illumination light source 11 is, for example, a halogen lamp or an LED. The index chart 40 is disposed so that a surface 40s of the index chart 40 is perpendicular to the optical axis of the collimator lens 52. The index chart 40 is a chart in which any pattern may be formed. The index chart 40 may be replaced with a point light source or a fiber end face of a fiber output light source.

The index chart 40 emits index light 250 from the surface 40s of the index chart 40, and the index light 250 enters the measurement optical system 300. Since a pattern forming range in the index chart 40 is narrow, only a light ray with an image height of zero is illustrated in FIG. 1.

The index light 250 which enters the measurement optical system 300 transmits through the beam splitter 32, passes through the collimator lens 52 so as to become collimated light, and reaches the dichroic mirror 31. In the dichroic mirror 31, part of the index light 250 is reflected so as to change the traveling direction by 90 degrees, is condensed by the objective lens 55, and enters the tested optical system 60. The objective lens 55 is installed on the stage 150 that moves in the Z-axis direction (the direction parallel to the measurement axis 1000), and its position is adjustable so that the index chart 40 is imaged by the index light 250. The position of the stage 150 is controlled by the computer 100.

In a case where the position at which the index light 250 is condensed by the measurement optical system 300 matches the apparent spherical center position or an apparent surface vertex position of a test surface (surface to be measured) 60k, the index light 250 is reflected by the test surface 60k, and travels back in substantially the same optical path as the incident optical path. The test surface 60k is a k-th (k = 1, 2, ..., N) test surface in the tested optical system 60. In other words, the index light 250 reflected by the test surface 60k transmits through the objective lens 55, reaches the dichroic mirror 31, is partially reflected so as to change the traveling direction by 90 degrees, transmits through the collimator lens 52, and reaches the beam splitter 32. The index light 250 is partially reflected by the beam splitter 32, and an image of the index chart 40 is imaged on a light receiving surface 90s of the image sensor 90. The image captured by the image sensor 90 is sent to the computer 100.

The index light 250 reflected by the test surfaces other than the test surface 60k also reaches the image sensor 90. In a case where the condensing position of the index light 250 matches the apparent spherical center of the test surface 60k, most of the index light 250 is not imaged on the light receiving surface 90s due to the vignetting at the measurement optical system 300, and thus can be ignored. In a case where the condensing position of the index light 250 matches the apparent surface vertex of the test surface 60k, a test surface at a position within the depth of field of the measurement optical system 300 is imaged. Accordingly, the focal length of the collimator lens 52 in the measurement optical system 300 may be large, the lens diameter of the objective lens 55 may be approximately the same or more than the effective aperture of the collimator lens 52, and its focal length may be small.

The interferometer 400 is a Michelson interferometer that includes a low coherence light source (second light source) 10, fibers 20, 21, 22, and 23, a fiber coupler 30, a collimator lens 51, a mirror 70, a detector 91, and a reference stage (optical path length changing unit) 152. The low coherence light source 10 emits light with a wavelength different from that of the index light 250. The light of the low coherence light source 10 passes through the fiber 20, and at the fiber coupler 30, is split (divided) into the test light 200 and the reference light 201. The reference light 201 passes through the fiber 22 and is emitted. The test light 200 passes through the fiber 21 and is emitted in accordance with the numerical aperture of the fiber 21 from a fiber end 21p (emitting point (first point)).

The test light 200 emitted from the fiber end 21p enters the measurement optical system 300. The test light 200 becomes collimated light at the collimator lens 50, transmits through the dichroic mirror 31, is condensed by the objective lens 55, and enters the tested optical system 60.

In this embodiment, the index light 250 and the test light 200 have different wavelengths. For example, the index light 250 has a wavelength with a center wavelength of 530 nm, and the test light 200 has a wavelength with a center wavelength of 1310 nm. Therefore, a condensing position deviation between the index light 250 and the test light 200 is caused by the wavelength difference between the index light 250 and the test light 200 due to the objective lens 55 or an optical element between the first surface and the test surface 60k in the tested optical system 60.

In this embodiment, the collimator lens 50 as an optical element in the measurement optical system 300 is installed on the stage 151 that moves in the Z-axis direction. The relative positions of the collimator lens 50 and the fiber end 21p (the emitting point) are adjusted, whereby the condensing position of the test light 200 by the measurement optical system 300 can be adjusted so that the condensing position deviation between the index light 250 and the test light 200 is corrected. The position of the stage 151 is controlled by the computer 100.

Similarly to the index light 250, in a case where the condensing position of the test light 200 matches the apparent center of curvature or the apparent surface vertex position of the test surface 60k, the test light 200 is reflected by the test surface 60k, and travels back in substantially the same optical path as the incident optical path. In other words, the test light 200 reflected by the test surface 60k transmits through the objective lens 55, the dichroic mirror 31, the collimator lens 50, and returns to the fiber end 21p (entering point (second point)). The emitting point (first point) and the entering point (second point) are the same point.

The test light 200 reflected by the test surfaces other than the test surface 60k also reaches the fiber end 21p. In a case where the condensing position of the test light 200 matches the apparent spherical center of the test surface 60k, most of the test light 200 is not condensed at the fiber end 21p due to the vignetting at the measurement optical system 300, and thus its light amount is small. In a case where the condensing position of the test light 200 matches the apparent surface vertex of the test surface 60k, the reflected light from a test surface at a position within the depth of field of the measurement optical system 300 is condensed. Thus, the focal length of the collimator lens 50 in the measurement optical system 300 may be large, and the lens diameter of the objective lens 55 may be approximately the same or more than the effective aperture of the collimator lens 50, and its focal length may be small.

The test light 200 that has returned to the fiber end 21p passes through the fiber 21 again and reaches the fiber coupler 30. The reference light 201 emitted from the fiber 22 becomes collimated light by the collimator lens 51, is reflected by the mirror 70, passes through the collimator lens 51, the fiber 22 again, and reaches the fiber coupler 30. The test light 200 and the reference light 201 interfere with each other at the fiber coupler 30, and the interference light passes through the fiber 23 and is detected by the detector 91, and the interference signal is sent to the computer 100.

The mirror 70 is installed on the reference stage 152 which moves in the Z-axis direction, and moving the reference stage 152 can change the optical path length (the reference optical path length) of the reference light 201. An envelope curve of the interference signal takes the maximum value in a case where the optical path lengths of the test light 200 and the optical path length of the reference light 201 are equal to each other. The information on the position of the reference stage 152 is sent to the computer 100.

The computer 100 calculates (acquires) the optical path length of the test surface 60k based on the interference signal. The computer 100 calculates an optical path length of each of the test surfaces while sequentially changing the test surface 60k, and calculates (acquires) the surface distance of the tested optical system 60.

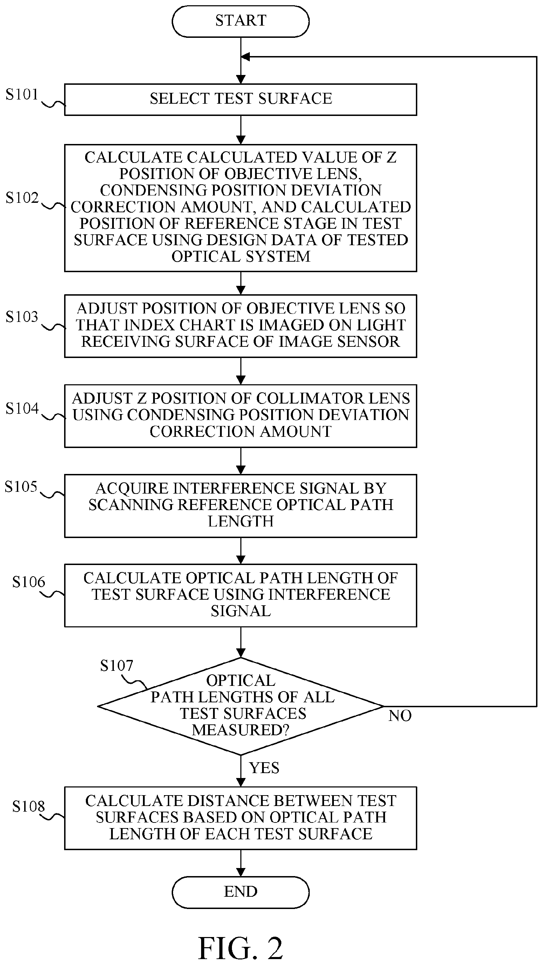

FIG. 2 is a flowchart illustrating the measurement procedure of the surface distance of the tested optical system 60 according to this embodiment.

First, in step S101, the test surface 60k is selected from a plurality of test surfaces (surface number: N). The test surface 60k may be selected from the first surface to the N-th surface of the tested optical system 60 in this order (in the order of the optical path lengths) or may be selected in the order being farther from or near to the center position of curvature. Alternatively, the test surface 60k may be selected in the order of the position at which the objective lens 55 is installed with respect to each of the test surfaces, or may be selected at random.

Next, in step S102, using the design data (the design information) of the tested optical system 60, the computer 100 calculates a calculated value of the Z position of the objective lens 55, a condensing position deviation correction amount, and a calculated position of the reference stage 152 during measurement of the test surface 60k. The Z position of the objective lens 55 is a Z position (calculated value) of the objective lens 55 at which the condensing position of the objective lens 55 matches the apparent center position of curvature or the apparent surface vertex position of the test surface 60k. In this embodiment, the condensing position deviation correction amount is the adjustment amount of the Z position of the collimator lens 50. The adjustment amount of the Z position of the collimator lens 50 is the difference between the current Z position of the collimator lens 50 and the Z position of the collimator lens 50 at which the condensing positions by the objective lens 55 of the index light 250 and the test light 200 match. These values are calculated based on paraxial calculation or ray tracing by using the design data of the tested optical system 60. The calculated position of the reference stage 152 is a position of the reference stage 152 at which the optical path length of the test light 200 reflected by the test surface 60k is equal to the optical path length (the reference optical path length) of the reference light 201, and is calculated from the design data of the tested optical system 60.

Then, in step S103, the Z position of the objective lens 55 is adjusted so that an image of the index chart 40 is formed (imaged) on the light receiving surface 90s of the image sensor 90 by using the stage 150. In step S103, the objective lens 55 is disposed near the Z position calculated in step S102, and the Z position of the objective lens 55 is adjusted so that the index chart 40 is imaged on the light receiving surface 90s. In this embodiment, the objective lens 55 is disposed on the stage 150, and the relative positions of the objective lens 55 and the tested optical system 60 are adjusted. Alternatively, the objective lens 55 may be fixed, and the tested optical system 60 may be disposed on the stage so as to adjust the position of the tested optical system 60, whereby the relative positions of the measurement optical system 300 and the tested optical system 60 may be adjusted. Alternatively, both of the objective lens 55 and the tested optical system 60 may include an adjusting unit.

Next, in step S104, the Z position of the collimator lens 50 is adjusted so that the condensing position deviation is corrected by using the condensing position deviation correction amount calculated in step S102. The Z position of the collimator lens 50 is adjusted by the stage 151 in which the collimator lens 50 is disposed.

Next, in step S105, the reference optical path length is scanned by the reference stage 152, and the interference signal is acquired. The interference signal may be acquired by making the reference stage 152 move in the entire range in which the reference stage 152 can be driven, however, making the reference stage 152 move only in the range near the calculated position of the reference stage 152 so as to obtain the interference signal results in shortening the measurement time.

Next, in step S106, the optical path length of the test surface 60k is calculated based on the measurement position of the reference stage 152 at which the envelope curve of the interference signal takes the maximum value. Since the test light reflected by the test surfaces other than the test surface 60k also returns to the fiber end 21p, the envelope curve of the interference signal takes the maximum value at a plurality of positions. In order to specify which corresponds to the optical path length of the test surface 60k, the calculated position of the reference stage 152 calculated in step S102 is used. The optical path length which corresponds to the maximum value near the calculated position is the optical path length of the test surface 60k.

Next, in step S107, whether the optical path lengths of the entire test surfaces were measured or not is checked. When the measurement is completed, the flow proceeds to step S108, and when the measurement is not completed, the flow returns to step S101.

Finally, in step S108, a distance between the test surfaces is calculated based on the optical path length of each of the test surfaces. In step S108, first, values of the optical path lengths of adj acent test surfaces and information on the refractive index between these test surfaces are extracted. The information on the refractive index may be the design data of the tested optical system 60. The optical path length difference is calculated from the optical path lengths of the adjacent test surfaces, and separately, a group refractive index

$N_g(\lambda_0)$ is also calculated from the information on the refractive index and the center wavelength $\lambda_0$ of the low coherence light source 10. The group refractive index can be calculated by using the following equation (1):

$$N_g(\lambda_0) = N_p(\lambda_0) - \lambda_0 (dN_p(\lambda_0)/d\lambda) \cdots\cdots (1)$$

where $N_p(\lambda_0)$ is a phase refractive index at a wavelength $\lambda_0$, and $\lambda$ is a wavelength. The surface distance of the adjacent test surfaces can be calculated by dividing the calculated optical path length difference by the group refractive index. In a case where the distance of the test surfaces is air, the division by the group refractive index may be omitted, and the optical path length difference may be regarded as the surface distance. This calculation is performed for the distances of the entire test surfaces. Then, the measurement flow is completed.

Normally, in a case where the light which is reflected by the test surface 60k in the middle of the tested optical system 60 is used for the measurement, since the condensing position deviation of the index light 250 and the test light 200 is enlarged, and the test light 200 is widened at the fiber end 21p due to the condensing position deviation, the intensity of the interference signal acquired by the interferometer 400 is weak, or the interference signal cannot be acquired. As a result, the optical path length of the test surface cannot be measured. In this embodiment, in step S 104, the Z position of the collimator lens 50 is adjusted so as to match the condensing positions of the index light 250 and the test light 200 by the objective lens 55, whereby the condensing position deviation is corrected. Therefore, even under a circumstance where the intensity of the reflected light of the test light 200 is relatively low, for example, surfaces which are bonded together, or surfaces in which light absorption is large in a lens before the test surface, etc., an optical path length of the test surface can be acquired, and the surface distances can be measured even for test surfaces in which the condensing position deviation in the optical path at the time of measurement is large.

In this embodiment, the pellicle beam splitter is used as the beam splitter 32, however, a cube-type beam splitter or a half mirror may alternatively be used.

In this embodiment, the achromatic lens with a small amount of chromatic aberration is used as the objective lens 55. However, in a case where the condensing position deviation of the index light 250 and the test light 200 due to the chromatic aberration of the objective lens 55 cannot be ignored, the adjustment amount of the Z position of the collimator lens 50 including the design data of the objective lens 55 may be calculated in step S102.

In this embodiment, the dichroic mirror 31 is used, however, a cube-type beam splitter, a plate-type beam splitter, or a pellicle beam splitter may alternatively be used. Otherwise, in a case where the light beam diameter of the index light 250 is larger than that of the test light 200, a mirror with a hole through which the test light 200 passes may be used.

In this embodiment, by using the stage 151, the position of the collimator lens 50 is adjusted, whereby the condensing position deviation is corrected. However, the fiber end 21p instead of the collimator lens 50 may be disposed on the stage 151 and the position of the fiber end 21p may be adjusted, whereby the condensing position deviation may be corrected. In such a case, since the optical path length which is measured at each of the test surfaces in the interferometer 400 changes depending on the position of the fiber end 21p, the optical path length is corrected in accordance with the position of the stage 151.

In this embodiment, the measurement procedure of measuring the optical path length of the test surfaces in the tested optical system 60 for each of the test surfaces, however, in a case where an optical path length which corresponds to a test surface other than the test surface 60k is acquired at the same time as measuring the test surface 60k, a surface distance can be calculated by using such an optical path length. Accordingly, an effect of shortening the measurement time can be acquired.

SECOND EMBODIMENT

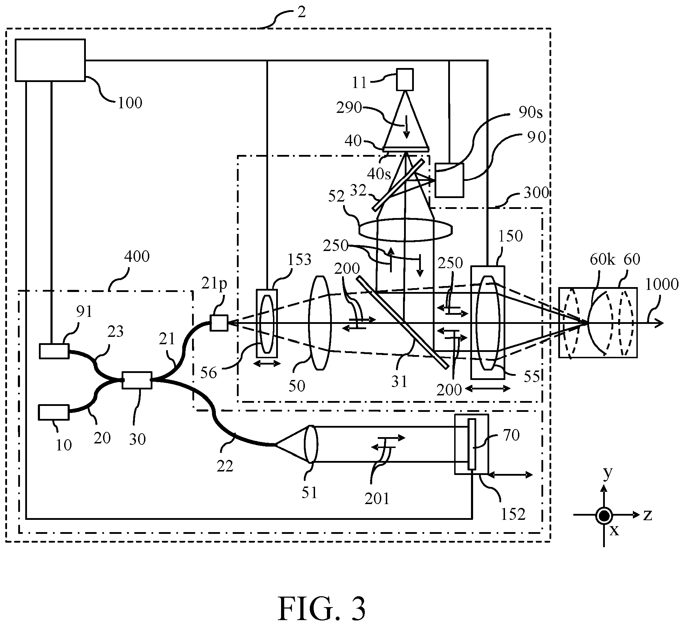

FIG. 3 illustrates the configuration of a surface distance measurement apparatus 2 according to a second embodiment. A description of the matters common to those of the surface distance measurement apparatus 1 according to the first embodiment will be omitted. The surface distance measurement apparatus 2 includes the illumination light source 11, the index chart 40, the measurement optical system 300, the image sensor 90, the stage (adjusting unit) 150, a stage (correction unit) 153, the interferometer 400, and the computer 100. The measurement optical system 300 includes the dichroic mirror 31, the beam splitter 32, the collimator lens 50, the objective lens 55, the collimator lens 52, and a focusing lens 56.

The test light 200 emitted from the fiber end 21p transmits through the focusing lens 56, becomes collimated light at the collimator lens 50, transmits through the dichroic mirror 31, is condensed by the objective lens 55, and enters the tested optical system 60.

In this embodiment, since the index light 250 and the test light 200 have different wavelengths, the condensing positions by the measurement optical system 300 of the index light 250 and the test light 200 do not match.

In this embodiment, the focusing lens 56 as an optical element in the measurement optical system 300 is installed on the stage 153 which moves in the Z-axis direction. The relative positions of the focusing lens 56 and the fiber end 21p (emitting point) are adjusted, whereby the condensing position of the test light 200 by the measurement optical system 300 can be adjusted so that the condensing position deviation between the index light 250 and the test light 200 is corrected. The position of the stage 153 is controlled by the computer 100.

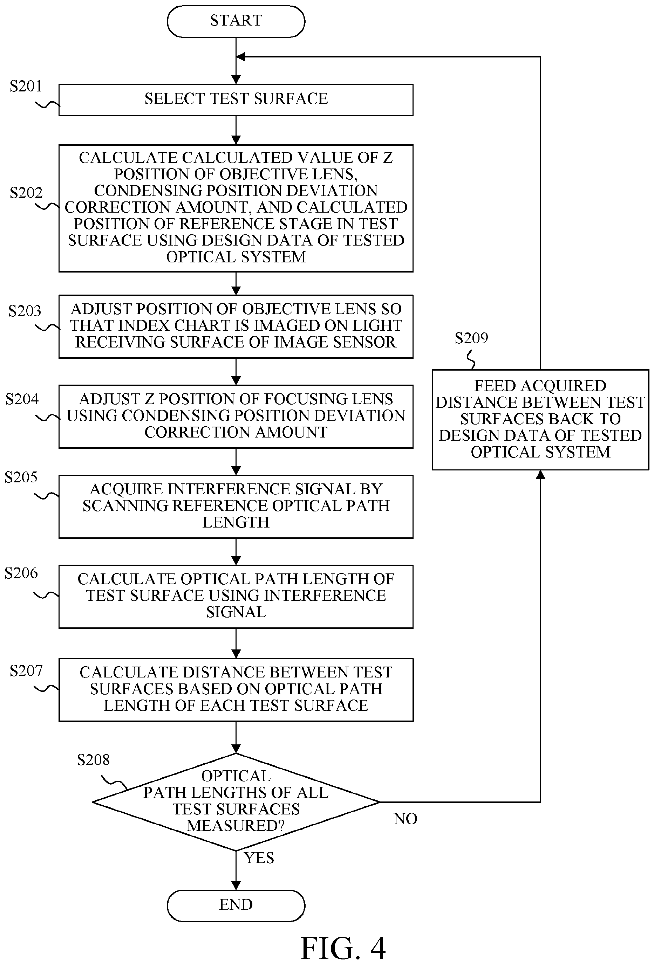

FIG. 4 is a flowchart illustrating the measurement procedure of the surface distance of the tested optical system 60 according to this embodiment.

First, in step S201, the test surface 60k is selected from a plurality of test surfaces.

Next, in step S202, using the design data of the tested optical system 60, the computer 100 calculates a calculated value of the Z position of the objective lens 55, a condensing position deviation correction amount, and a calculated position of the reference stage 152 during measurement of the test surface 60k. The condensing position deviation correction amount in this embodiment is an adjustment amount of the Z position of the focusing lens 56. The adjustment amount of the Z position of the focusing lens 56 is a difference between the current position of the focusing lens 56 and the Z position of the focusing lens 56 at which the condensing positions by the objective lens 55 of the index light 250 and the test light 200 match.

Next, in step S203, the Z position of the objective lens 55 is adjusted so that an image of the index chart 40 is formed (imaged) on the light receiving surface 90s of the image sensor 90 by using the stage 150.

Next, in step S204, the Z position of the focusing lens 56 is adjusted by using the condensing position deviation correction amount calculated in step S202. The Z position of the focusing lens 56 is adjusted by the stage 153 in which the focusing lens 56 is disposed.

Next, in step S205, the reference optical path length is scanned by the reference stage 152, and the interference signal is acquired.

Next, in step S206, the optical path length of the test surface 60k is calculated based on the measurement position of the reference stage 152 at which the envelope curve of the interference signal takes the maximum value.

Next, in step S207, a distance of the test surfaces is calculated based on the calculated optical path length of the test surface 60k. In step S207, first, the value of the optical path length of the selected surface and the information on the refractive indexes of the surfaces in front of and in rear of the selected surface are extracted. Then, the optical path length difference is calculated from each of the optical path lengths.

Next, the surface distance can be calculated by dividing the calculated optical path length difference by the separately calculated group refractive index. In this step, in a case where you don't have data of the optical path lengths of front and rear surfaces of the selected test surface 60k, this step may not be performed, or the surface distance may be calculated by using the design data alternatively.

Next, in step S208, whether the optical path lengths of the entire test surfaces are measured or not is checked. When the measurement is not completed, the flow proceeds to step S209.

Next, in step S209, the value of the surface distance which is calculated in step S207 is fed back to the design data of the tested optical system 60, and the surface distance of the design data is replaced by the calculated surface distance. Next, the flow returns to step S201. In a case where step S207 is not performed, this step S209 is also not performed.

Finally, in step S208, in a case where the optical path lengths of the entire test surfaces are measured, the measurement is completed.

In this embodiment, in step S204, the Z position of the focusing lens56 is adjusted so that the condensing positions of the index light 250 and the test light 200 by the objective lens 55 match, whereby the condensing position deviation is corrected. Accordingly, surface distances can be measured even for those in which the condensing position deviation is large in the optical path at the time of measurement.

In this embodiment, the focusing lens 56 is disposed between the fiber end 21p and the collimator lens 50, however, the focusing lens 56 may be installed between the collimator lens 50 and the dichroic mirror 31. Alternatively, the focusing lens 56 may be removed, and a collimator lens configured to adjust the focal point may be used instead of the collimator lens 50.

In this embodiment, the acquired surface distances are sequentially fed back to the design data, whereby an effect of reducing the error of the condensing position deviation correction amount caused by the arrangement deviation of the design data and the actual test surfaces can be acquired. The test surface 60k in step S201 may be selected at random, however, the test surface 60k may be selected in the order of the optical path lengths so that the feedback is performed effectively, whereby the condensing position deviation correction amount can be calculated in a more accurately.

THIRD EMBODIMENT

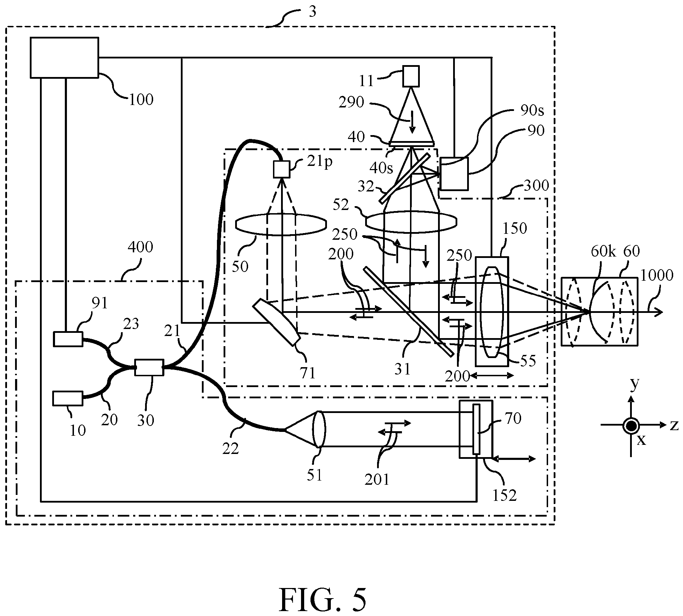

FIG. 5 illustrates the configuration of a surface distance measurement apparatus 3 according to a third embodiment. A description of the matters common to those of the surface distance measurement apparatus 1 according to the first embodiment will be omitted. The surface distance measurement apparatus 3 includes the illumination light source 11, the index chart 40, the measurement optical system 300, the image sensor 90, the stage (adjusting unit) 150, the interferometer 400, and the computer 100. The measurement optical system 300 includes the dichroic mirror 31, the beam splitter 32, the collimator lens 50, the objective lens 55, the collimator lens 52, and a shape-variable mirror 71. The shape-variable mirror 71 is disposed in the optical path between the fiber end 21p (the emitting point) and the objective lens 55, and is for example, a Spatial Light Modulator (SLM).

The test light 200 which is emitted from the fiber end 21p becomes collimated light at the collimator lens 50, is reflected by the shape-variable mirror 71, transmits through the dichroic mirror 31, is condensed by the objective lens 55, and enters the tested optical system 60.

In this embodiment, since the index light 250 and the test light 200 have different wavelengths, the condensing positions by the measurement optical system 300 of the index light 250 and the test light 200 do not match.

In this embodiment, the shape-variable mirror 71 as an optical element in the measurement optical system 300 is shape-adjusted (deformed), whereby the condensing position of the test light 200 by the measurement optical system 300 can be adjusted so that the condensing position deviation between the index light 250 and the test light 200 is corrected. The shape of the shape-variable mirror 71 is controlled by the computer 100. In this embodiment, the computer 100 is the correction unit configured to adjust the shape of the shape-variable mirror 71.

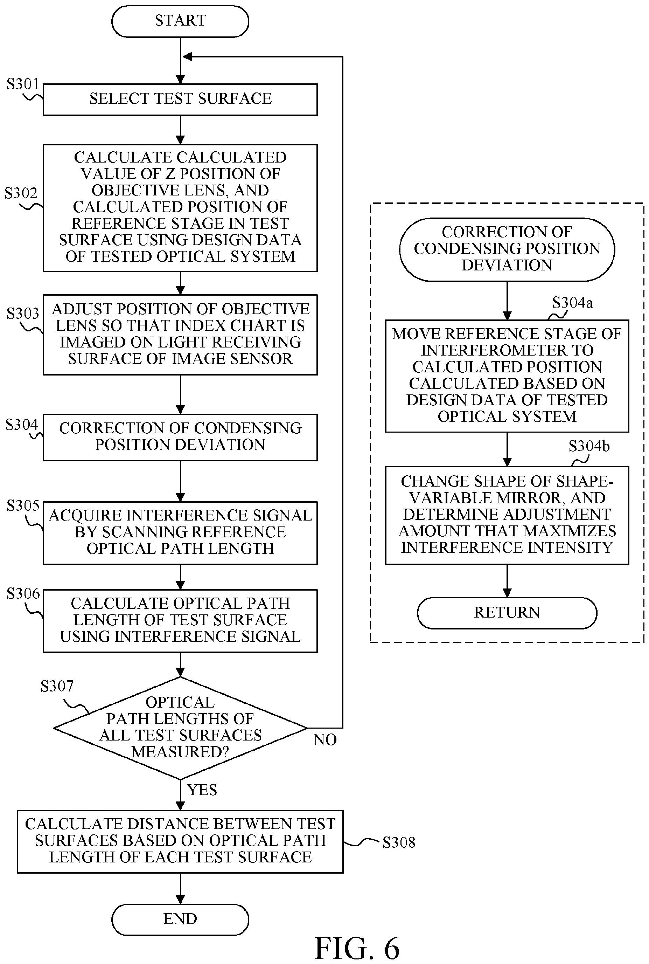

FIG. 6 is a flowchart illustrating the measurement procedure of the surface distance of the tested optical system 60 according to the third embodiment.

First, in step S301, the test surface 60k is selected from a plurality of test surfaces.

Next, in step S302, using the design data of the tested optical system 60, the computer 100 calculates a calculated value of the Z position of the objective lens 55 and a calculated position of the reference stage 152 during measurement of the test surface 60k.

Then, in step S303, the Z position of the objective lens 55 is adjusted so that an image of the index chart 40 is formed (imaged) on the light receiving surface 90s of the image sensor 90 by using the stage 150.

Next, in step S304, the condensing position deviation is corrected. First, in step S304a, the reference stage 152 of the interferometer 400 is moved to the calculated position calculated in step S302. Next, in step S304b, the shape of the shape-variable mirror 71 is changed, and the adjustment amount that maximizes the intensity of the interference signal in the detector 91 of the interferometer 400 (the detection intensity of the interferometer 400) is determined.

Next, in step S305, the reference optical path length is scanned by the reference stage 152, and the interference signal is acquired.

Next, in step S306, the optical path length of the test surface 60k is calculated based on the measurement position of the reference stage 152 at which the envelope curve of the interference signal takes the maximum value.

Next, in step S307, whether the optical path lengths of the entire test surfaces are measured or not is checked. When the measurement is completed, the flow proceeds to step S308, and when the measurement is not completed, the flow returns to step S301.

Finally, in step S308, a distance of the test surfaces is calculated based on the optical path length of each of the test surfaces. Then, the measurement flow is completed.

In this embodiment, the shape of the shape-variable mirror 71 is adjusted so that the condensing positions of the index light 250 and the test light 200 match by the objective lens 55, whereby the condensing position deviation is corrected. Therefore, surface distances can be measured even for those in which the condensing position deviation is large in the optical path at the time of measurement.

In this embodiment, the shape-variable mirror 71 is disposed between the collimator lens 50 and the dichroic mirror 31, however, the shape-variable mirror 71 may be installed between the fiber end 21p and the collimator lens 50.

FOURTH EMBODIMENT

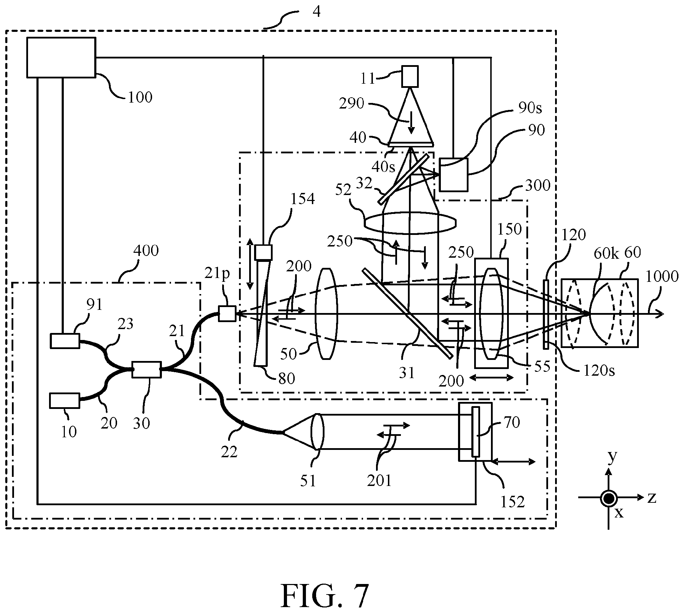

FIG. 7 illustrates the configuration of a surface distance measurement apparatus 4 according to a fourth embodiment. A description of the matters common to those of the surface distance measurement apparatus 1 according to the first embodiment will be omitted. The surface distance measurement apparatus 4 includes the illumination light source 11, the index chart 40, the measurement optical system 300, a reference plate 120, the image sensor 90, the stage (adjusting unit) 150, the stage (correction unit) 154, the interferometer 400, and the computer 100. The measurement optical system 300 includes the dichroic mirror 31, the beam splitter 32, the collimator lens 50, the objective lens 55, the collimator lens 52, and a transparent parallel plate 80.

The test light 200 emitted from the fiber end 21p transmits through the transparent parallel plate 80, becomes collimated light at the collimator lens 50, transmits through the dichroic mirror 31, is condensed by the objective lens 55, transmits through the reference plate 120, and enters the tested optical system 60.

In this embodiment, since the index light 250 and the test light 200 have different wavelengths, the condensing positions by the measurement optical system 300 of the index light 250 and the test light 200 do not match.

In this embodiment, the transparent parallel plate 80 includes optical elements that include two glass each with a triangular column shape. One of the optical elements is installed on the stage 154, and is slid in the Y-axis direction in FIG. 7. Thereby, the thickness of the transparent parallel plate 80 is adjusted, and the condensing position of the test light 200 by the measurement optical system 300 can be adjusted so that the condensing position deviation between the index light 250 and the test light 200 is corrected. The thickness of the transparent parallel plate 80 is controlled by the computer 100.

In this embodiment, test light is reflected by an optical path length reference plate 120s in addition to the test surfaces, and returns to the fiber end 21p. Since the optical path length reference plate 120s is a plane, a certain light amount of the test light 200 is reflected by the optical path length reference plate 120s returns to the fiber end 21p.

Since the optical path lengths which are measured at each of the test surfaces in the interferometer 400 change depending on the thickness of the transparent parallel plate 80, the optical path lengths are corrected depending on the thickness of the transparent parallel plate 80 and the refractive index. Alternatively, the optical path lengths may be corrected by using a reference optical path length of the test light 200 which is reflected by the optical path length reference plate 120s of the reference plate 120 disposed in front of the tested optical system 60.

In this embodiment, the thickness of the transparent parallel plate 80 is adjusted so that the condensing positions of the index light 250 and the test light 200 match by the objective lens 55, whereby the condensing position deviation is corrected. Therefore, surface distances can be measured even for those in which the condensing position deviation is large in the optical path during measurement.

In this embodiment, the thickness of the transparent parallel plate 80 is adjusted by sliding one of the optical elements, however, a stage may be prepared for both of the optical elements, and both of the optical elements may be slid at the same time or separately.

FIFTH EMBODIMENT

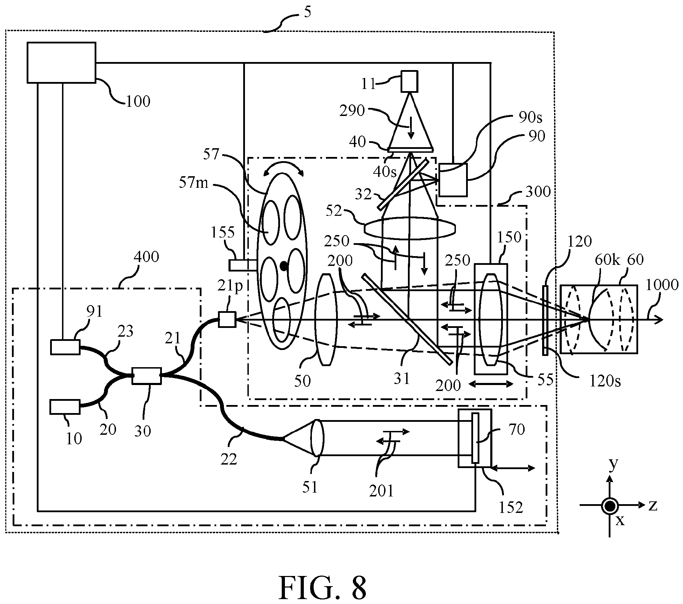

FIG. 8 illustrates the configuration of a surface distance measurement apparatus 5 according to a fifth embodiment. A description of the matters common to those of the surface distance measurement apparatus 1 according to the first embodiment will be omitted. The surface distance measurement apparatus 5 includes the illumination light source 11, the index chart 40, the measurement optical system 300, the reference plate 120, the image sensor 90, the stage (the adjusting unit) 150, a turret (correction unit) 155, the interferometer 400, and the computer 100. The measurement optical system 300 includes the dichroic mirror 31, the beam splitter 32, the collimator lens 50, the objective lens 55, the collimator lens 52, and an optical element turret 57 (optical element number: M). The optical element turret 57 includes M optical elements, an m-th (m = 1, 2, ..., M) exchange optical element 57m is selected by the turret 155, and is disposed in the optical path of the measurement optical system 300.

The test light 200 emitted from the fiber end 21p transmits through the exchange optical element 57m, becomes collimated light at the collimator lens 50, transmits through the dichroic mirror 31, is condensed by the objective lens 55, transmits through the reference plate 120, and enters the tested optical system 60.

In this embodiment, since the index light 250 and the test light 200 have different wavelengths, the condensing positions by the measurement optical system 300 of the index light 250 and the test light 200 do not match.

In this embodiment, the exchange optical element 57m is changed, and the condensing position of the test light 200 by the measurement optical system 300 is adjusted so that the condensing position deviation of the index light 250 and the test light 200 is corrected. The optical element turret 57 includes a plurality of lenses with different focal lengths, or a plurality of transparent parallel plates with different thicknesses. The selection of the optical element by the turret 155 is controlled by the computer 100.

Since the optical path lengths measured at each of the test surfaces in the interferometer 400 change depending on the selected exchange optical element 57m, the optical path lengths are corrected depending on the thickness of the exchange optical element 57m and the refractive index. Alternatively, the optical path lengths may be corrected by using a reference optical path length of the test light 200 reflected by the optical path length reference plate 120s of the reference plate 120 disposed in front of the tested optical system 60.

In this embodiment, the exchange optical element 57m is exchanged so that the condensing positions of the index light 250 and the test light 200 match by the objective lens 55, whereby the condensing position deviation is corrected. Therefore, surface distances can be measured even for those in which the condensing position deviation is large in the optical path at the time of measurement.

SIXTH EMBODIMENT

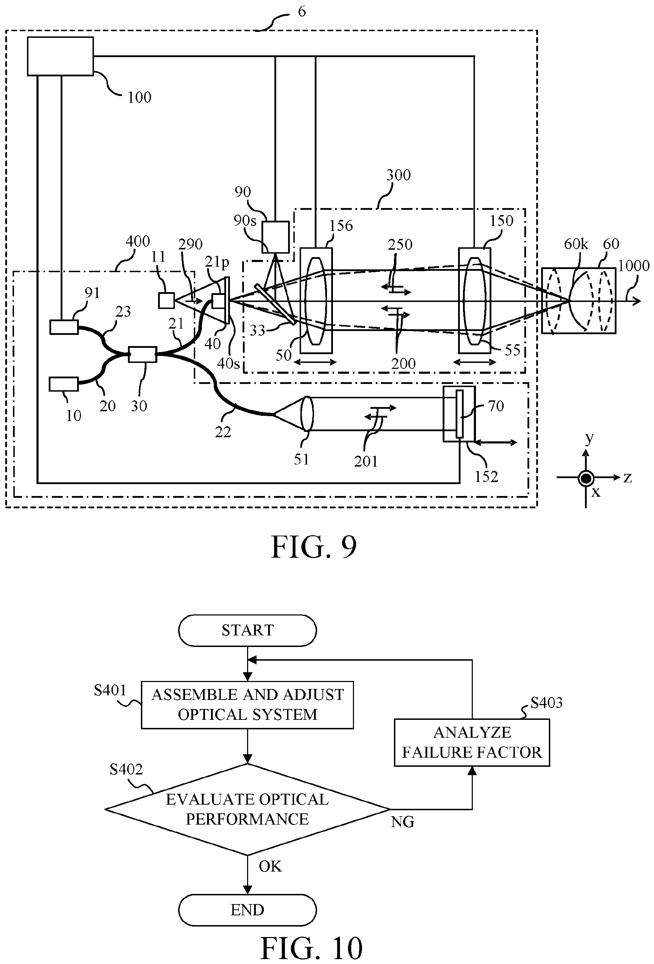

FIG. 9 illustrates the configuration of a surface distance measurement apparatus 6 according to a sixth embodiment. A description of the matters common to those of the surface distance measurement apparatus 1 according to the first embodiment will be omitted. The surface distance measurement apparatus 6 includes the illumination light source 11, the index chart 40, the measurement optical system 300, the image sensor 90, the stage (adjusting unit) 150, a stage (correction unit) 156, the interferometer 400, and the computer 100. The measurement optical system 300 includes the beam splitter 33, the collimator lens 50, and the objective lens 55.

The illumination light 290 emitted from the illumination light source 11 illuminates the index chart 40 of a transmission type. The index chart 40 is disposed so that the surface 40s of the index chart 40 is perpendicular to the optical axis of the collimator lens 50. The index chart 40 emits the index light 250 from the surface 40s of the index chart 40, and the index light 250 enters the measurement optical system 300.

The index light 250 which enters the measurement optical system 300 transmits through the beam splitter 33, passes through the collimator lens 50 so as to become collimated light, is condensed by the objective lens 55, and enters the tested optical system 60. In a case where the position at which the index light 250 is condensed by the measurement optical system 300 matches the apparent spherical center position or the apparent surface vertex position of the test surface 60k, the index light 250 is reflected by the test surface 60k, and travels back in substantially the same optical path as the incident optical path. In other words, the index light 250 reflected by the test surface 60k transmits through the objective lens 55, transmits through the collimator lens 50, and is partially reflected by the beam splitter 33. An image of the index chart 40 is imaged on the light receiving surface 90s of the image sensor 90. The image captured by the image sensor 90 is sent to the computer 100.

The test light 200 is emitted from the fiber end 21p. A hole is provided in the index chart 40 so that the fiber 21 is passed therethrough, and the fiber end 21p of the fiber 21 is disposed on the surface 40s of the index chart. The test light 200 transmits through the beam splitter 33, becomes collimated light at the collimator lens 50, is condensed by the objective lens 55, and enters the tested optical system 60.

In this embodiment, since the index light 250 and the test light 200 have different wavelengths, the condensing positions by the measurement optical system 300 of the index light 250 and the test light 200 do not match.

In this embodiment, the collimator lens 50 is installed on the stage 156 which moves in the Z-axis direction. Moving the collimator lens 50 in the Z-axis direction can adjust the condensing position of the test light 200 by the measurement optical system 300 to the condensing position of the index light 250. The position of the stage 156 is controlled by the computer 100.

In this embodiment, the Z position of the collimator lens 50 is adjusted so that the condensing positions of the index light 250 and the test light 200 match by the objective lens 55, whereby the condensing position deviation is corrected. Therefore, surface distances can be measured even for those in which the condensing position deviation is large in the optical path at the time of measurement.

SEVENTH EMBODIMENT

FIG. 10 is a flowchart of a manufacturing method of an optical system according to a seventh embodiment. The results of the surface distances measured by using any one of the surface distance measurement apparatuses 1 to 6 according to the first to the sixth embodiments can be fed back to the manufacturing method of the optical system (the tested optical system 60).

First, in step S401, the manufacturer assembles the optical system using a plurality of optical elements, and adjusts the position of each of the optical elements.

Next, in step S402, the manufacturer evaluates the performance of the assembled and adjusted optical system. In a case where a satisfactory performance is not acquired, the flow proceeds to step S403, and a factor of failure (unsatisfactory performance) is analyzed. One of the analysis targets is a distance between the optical elements. Any one of the surface distance measurement apparatuses 1 to 6 can be used for the measurement of the surface distance. On the other hand, in a case where a satisfactory performance result is acquired, the manufacturing of the optical system according to the present manufacturing method ends.

The measurement result of the surface distance can be used not only for the failure factor analysis in step S403 but also for the position adjustment of the optical elements in step S401. In other words, a surface distance of any optical element of the optical system may be measured by using any one of the surface distance measurement apparatuses 1 to 6, and the position of the optical element can be adjusted by using the result.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

Each embodiment can provide a measurement apparatus which can accurately acquire a distance between test surfaces by correcting a condensing position deviation, even in a case where there is a wavelength difference between the test light and the index light.

**Claims**

1. A measurement apparatus (1, 2, 3, 4, 5, 6) comprising:

   a first light source (11) configured to illuminate a chart (40);
   a measurement optical system (300) configured to make first light (250) emitted from the chart enter a tested optical system (60);
   an image sensor (90) configured to receive the first light reflected by a plurality of test surfaces of the tested optical system through the measurement optical system;
   an adjusting unit (150) configured to adjust relative positions of the measurement optical system and the tested optical system so as to form an image of the chart by the first light on a light receiving surface (90s) of the image sensor;
   an interferometer (400) including a second light source (10) configured to emit second light with a wavelength different from that of the first light, the interferometer being configured to split the second light from the second light source into test light (200) and reference light (201), and to acquire an interference signal by causing interference between the reference light and the test light that has emitted from a first point (21p), that has been reflected by the plurality of test surfaces, and that has entered a second point (21p) through the measurement optical system;
a correction unit (151, 153, 100, 154, 155, 156) configured to correct a condensing position deviation between the first light and the test light caused by a wavelength difference between the first light and the test light; and
an acquiring unit (100) configured to acquire an optical path length from the first point to the plurality of test surfaces based on the interference signal, and a distance between two test surfaces among the plurality of test surfaces based on the optical path length.

2. The measurement apparatus according to claim 1, **characterized in that** the correction unit determines an adjustment amount of a condensing position based on a deviation amount of the condensing position deviation.

3. The measurement apparatus according to claim 1 or 2, **characterized in that** the correction unit adjusts a condensing position so as to maximize detection intensity of the interferometer.

4. The measurement apparatus according to claim 2, **characterized in that** the deviation amount is determined by using design information on the tested optical system.

5. The measurement apparatus according to claim 2, **characterized in that** the deviation amount is determined by using design information on the tested optical system and a measurement value of the acquired distance between adjacent test surfaces among the plurality of test surfaces.

6. The measurement apparatus according to any one of claims 1 to 5, **characterized in that** the correction unit corrects the condensing position deviation by adjusting a position of an optical element in the measurement optical system.

7. The measurement apparatus according to any one of claims 1 to 6, **characterized in that** the correction unit corrects the condensing position deviation by exchanging an optical element in the measurement optical system.

8. The measurement apparatus according to any one of claims 1 to 7, **characterized in that** the correction unit corrects the condensing position deviation by adjusting a shape of an optical element in the measurement optical system.

9. The measurement apparatus according to claim 6, **characterized in that** the correction unit corrects the condensing position deviation by adjusting relative positions of a collimator lens as the optical element in the measurement optical system and the first point.

10. The measurement apparatus according to claim 6, **characterized in that** the correction unit corrects the condensing position deviation by adjusting relative positions of a focusing lens as the optical element in the measurement optical system and the first point.

11. The measurement apparatus according to claim 7, **characterized in that** the optical element in the measurement optical system includes a plurality of parallel plates having thicknesses that are different from one another,

wherein the correction unit corrects the condensing position deviation by selecting one of the plurality of parallel plates.

12. The measurement apparatus according to claim 7, **characterized in that** the optical element in the measurement optical system includes a plurality of lenses having focal lengths that are different from one another,

wherein the correction unit corrects the condensing position deviation by selecting one of the plurality of lenses.

13. The measurement apparatus according to claim 8, **characterized in that** the optical element in the measurement optical system includes a shape-variable mirror,

wherein the correction unit corrects the condensing position deviation by adjusting a shape of the shape-variable mirror.

14. The measurement apparatus according to claim 8, **characterized in that** the optical element in the measurement optical system includes a parallel plate that includes two glasses and has a variable thickness,

wherein the correction unit corrects the condensing position deviation by adjusting the thickness of the parallel plate.

15. The measurement apparatus according to any one of claims 1 to 14, **characterized in that** the adjusting unit adjusts the relative positions of the measurement optical system and the tested optical system in a direction parallel to a measurement axis as an optical axis in the measurement optical system.

16. The measurement apparatus according to any one of claims 1 to 15, **characterized in that** the acquiring unit acquires optical path length from the first point to the plurality of test surfaces based on the interference signal acquired by the interferometer, after the condensing position deviation is corrected.

17. The measurement apparatus according to any one of claims 1 to 16, **characterized in that** the interferometer includes an optical path length changing unit configured to change a reference optical path length as an optical path length of the reference light,

wherein the interferometer acquires the interference signal by scanning the reference optical path length using the optical path length changing unit, after the image of the chart is formed on the light receiving surface by the adjusting unit and the condensing position deviation is corrected by the correction unit, and

wherein the acquiring unit acquires optical path length from the first point to the plurality of test surfaces based on the interference signal.

18. A measuring method comprising the steps of:

illuminating a chart (40);

making first light (250) emitted from the chart enter a tested optical system (60) and receiving the first light reflected by a plurality of test surfaces of the tested optical system through a measurement optical system (300) using an image sensor (90);

adjusting relative positions of the measurement optical system and the tested optical system so as to form an image of the chart by the first light on a light receiving surface (90s) of the image sensor;

splitting second light from a light source (10) configured to emit the second light with a wavelength different from that of the first light into test light (200) and reference light (201), and acquiring an interference signal by causing interference between the reference light and the test light that has emitted from a first point (21p), that has been reflected by the plurality of test surfaces, and that has entered a second point (21p) through the measurement optical system;

adjusting a condensing position of the test light to correct a condensing position deviation between the first light and the test light caused by a wavelength difference between the first light and the test light; and

acquiring optical path length from the first point to the plurality of test surfaces based on the interference signal, and a distance between two test surfaces among the plurality of test surfaces based on each optical path length.

19. A manufacturing method of an optical system, the method comprising the steps of:

**EP 4 400 804 A1**

measuring a surface distance of the optical system as the tested optical system using the measuring method according to claim 18, and adjusting the optical system by using a measurement result of the surface distance.

FIG. 1

START

S101 — SELECT TEST SURFACE

S102 — CALCULATE CALCULATED VALUE OF Z POSITION OF OBJECTIVE LENS, CONDENSING POSITION DEVIATION CORRECTION AMOUNT, AND CALCULATED POSITION OF REFERENCE STAGE IN TEST SURFACE USING DESIGN DATA OF TESTED OPTICAL SYSTEM

S103 — ADJUST POSITION OF OBJECTIVE LENS SO THAT INDEX CHART IS IMAGED ON LIGHT RECEIVING SURFACE OF IMAGE SENSOR

S104 — ADJUST Z POSITION OF COLLIMATOR LENS USING CONDENSING POSITION DEVIATION CORRECTION AMOUNT

S105 — ACQUIRE INTERFERENCE SIGNAL BY SCANNING REFERENCE OPTICAL PATH LENGTH

S106 — CALCULATE OPTICAL PATH LENGTH OF TEST SURFACE USING INTERFERENCE SIGNAL

S107 — OPTICAL PATH LENGTHS OF ALL TEST SURFACES MEASURED?

NO

YES

S108 — CALCULATE DISTANCE BETWEEN TEST SURFACES BASED ON OPTICAL PATH LENGTH OF EACH TEST SURFACE

END

FIG. 2

FIG. 3

START

S201 — SELECT TEST SURFACE

S202 — CALCULATE CALCULATED VALUE OF Z POSITION OF OBJECTIVE LENS, CONDENSING POSITION DEVIATION CORRECTION AMOUNT, AND CALCULATED POSITION OF REFERENCE STAGE IN TEST SURFACE USING DESIGN DATA OF TESTED OPTICAL SYSTEM

S203 — ADJUST POSITION OF OBJECTIVE LENS SO THAT INDEX CHART IS IMAGED ON LIGHT RECEIVING SURFACE OF IMAGE SENSOR

S204 — ADJUST Z POSITION OF FOCUSING LENS USING CONDENSING POSITION DEVIATION CORRECTION AMOUNT

S205 — ACQUIRE INTERFERENCE SIGNAL BY SCANNING REFERENCE OPTICAL PATH LENGTH

S206 — CALCULATE OPTICAL PATH LENGTH OF TEST SURFACE USING INTERFERENCE SIGNAL

S207 — CALCULATE DISTANCE BETWEEN TEST SURFACES BASED ON OPTICAL PATH LENGTH OF EACH TEST SURFACE

S208 — OPTICAL PATH LENGTHS OF ALL TEST SURFACES MEASURED?

NO

S209 — FEED ACQUIRED DISTANCE BETWEEN TEST SURFACES BACK TO DESIGN DATA OF TESTED OPTICAL SYSTEM

YES

END

FIG. 4

FIG. 5

START

S301 — SELECT TEST SURFACE

S302 — CALCULATE CALCULATED VALUE OF Z POSITION OF OBJECTIVE LENS, AND CALCULATED POSITION OF REFERENCE STAGE IN TEST SURFACE USING DESIGN DATA OF TESTED OPTICAL SYSTEM

S303 — ADJUST POSITION OF OBJECTIVE LENS SO THAT INDEX CHART IS IMAGED ON LIGHT RECEIVING SURFACE OF IMAGE SENSOR

S304 — CORRECTION OF CONDENSING POSITION DEVIATION

S305 — ACQUIRE INTERFERENCE SIGNAL BY SCANNING REFERENCE OPTICAL PATH LENGTH

S306 — CALCULATE OPTICAL PATH LENGTH OF TEST SURFACE USING INTERFERENCE SIGNAL

S307 — OPTICAL PATH LENGTHS OF ALL TEST SURFACES MEASURED? — NO

YES

CALCULATE DISTANCE BETWEEN TEST SURFACES BASED ON OPTICAL PATH LENGTH OF EACH TEST SURFACE — S308

END

---

CORRECTION OF CONDENSING POSITION DEVIATION

S304a — MOVE REFERENCE STAGE OF INTERFEROMETER TO CALCULATED POSITION CALCULATED BASED ON DESIGN DATA OF TESTED OPTICAL SYSTEM

S304b — CHANGE SHAPE OF SHAPE-VARIABLE MIRROR, AND DETERMINE ADJUSTMENT AMOUNT THAT MAXIMIZES INTERFERENCE INTENSITY

RETURN

FIG. 6

FIG. 7

FIG. 8

FIG. 9

FIG. 10

Europäisches
Patentamt

European
Patent Office

Office européen
des brevets

# EUROPEAN SEARCH REPORT

Application Number

EP 24 15 0157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/133924 A1 (HEINISCH JOSEF [DE] ET AL) 31 May 2012 (2012-05-31) * the whole document * | 1-19 | INV. G01B9/02015 G01B9/02017 G01B9/02055 |
| A | JP 2004 069594 A (OLYMPUS CORP) 4 March 2004 (2004-03-04) * the whole document * | 1-19 | G01B9/0209 G01B11/14 G01M11/02 |
| A | WO 2020/245511 A1 (FOGALE NANOTECH [FR]) 10 December 2020 (2020-12-10) * the whole document * | 1-19 | |
| A | EP 2 374 404 A1 (TOPCON CORP [JP]) 12 October 2011 (2011-10-12) * the whole document * | 1-19 | |
| A | EP 2 644 085 A1 (NIDEK KK [JP]) 2 October 2013 (2013-10-02) * the whole document * | 1-19 | |
| E | EP 4 339 553 A1 (CANON KK [JP]) 20 March 2024 (2024-03-20) * paragraphs [0011], [0039]; claims 9, 10; figures 1, 3 * | 18,19 | TECHNICAL FIELDS SEARCHED (IPC) G01B G01M |

The present search report has been drawn up for all claims

| Place of search | Date of completion of the search | Examiner |
|---|---|---|
| Munich | 3 May 2024 | Burkart, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 0157

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2024

| Patent document cited in search report | | Publication date | Patent family member(s) | | Publication date |
|---|---|---|---|---|---|
| US 2012133924 | A1 | 31-05-2012 | DE 102010053422 | B3 | 29-03-2012 |
| | | | EP 2458363 | A1 | 30-05-2012 |
| | | | JP 5902448 | B2 | 13-04-2016 |
| | | | JP 2012118066 | A | 21-06-2012 |
| | | | US 2012133924 | A1 | 31-05-2012 |
| JP 2004069594 | A | 04-03-2004 | NONE | | |
| WO 2020245511 | A1 | 10-12-2020 | CN 114008405 | A | 01-02-2022 |
| | | | EP 3980715 | A1 | 13-04-2022 |
| | | | JP 7312278 | B2 | 20-07-2023 |
| | | | JP 2022537803 | A | 30-08-2022 |
| | | | KR 20220017433 | A | 11-02-2022 |
| | | | TW 202104839 | A | 01-02-2021 |
| | | | US 2022357236 | A1 | 10-11-2022 |
| | | | WO 2020245511 | A1 | 10-12-2020 |
| EP 2374404 | A1 | 12-10-2011 | EP 2374404 | A1 | 12-10-2011 |
| | | | JP 5364385 | B2 | 11-12-2013 |
| | | | JP 2010158265 | A | 22-07-2010 |
| | | | US 2011267583 | A1 | 03-11-2011 |
| | | | WO 2010079550 | A1 | 15-07-2010 |
| EP 2644085 | A1 | 02-10-2013 | EP 2644085 | A1 | 02-10-2013 |
| | | | JP 6007549 | B2 | 12-10-2016 |
| | | | JP 2013208316 | A | 10-10-2013 |
| | | | US 2013265547 | A1 | 10-10-2013 |
| EP 4339553 | A1 | 20-03-2024 | EP 4339553 | A1 | 20-03-2024 |
| | | | JP 2024040947 | A | 26-03-2024 |
| | | | US 2024085269 | A1 | 14-03-2024 |

EPO FORM P0459

For more details about this annex : see Official Journal of the European Patent Office, No. 12/82

**EP 4 400 804 A1**

**Patent documents cited in the description**

- JP 2012118066 A